(19) **Europäisches Patentamt / European Patent Office / Office européen des brevets**

(11) **EP 4 723 188 A1**

(12) **EUROPEAN PATENT APPLICATION**
published in accordance with Art. 153(4) EPC

(43) Date of publication:
08.04.2026 Bulletin 2026/15

(21) Application number: 24822183.0

(22) Date of filing: 05.01.2024

(51) International Patent Classification (IPC):
$H01M\ 4/13^{(2010.01)}$    $H01M\ 4/36^{(2006.01)}$
$H01M\ 4/62^{(2006.01)}$    $H01M\ 10/052^{(2010.01)}$

(52) Cooperative Patent Classification (CPC):
H01M 4/13; H01M 4/131; H01M 4/36; H01M 4/485;
H01M 4/505; H01M 4/525; H01M 4/62;
H01M 10/052; H01M 10/0525; Y02E 60/10

(86) International application number:
PCT/CN2024/070890

(87) International publication number:
WO 2024/255222 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.06.2023 CN 202310703936

(71) Applicant: Contemporary Amperex Technology
Co., Limited
Ningde, Fujian 352100 (CN)

(72) Inventors:
• WU, Kai
  Ningde, Fujian 352100 (CN)

• JIN, Chao
  Ningde, Fujian 352100 (CN)
• YAN, Guanfusheng
  Ningde, Fujian 352100 (CN)
• YE, Yonghuang
  Ningde, Fujian 352100 (CN)
• WU, Zirui
  Ningde, Fujian 352100 (CN)
• DAI, Zhipeng
  Ningde, Fujian 352100 (CN)

(74) Representative: Lorenz Seidler Gossel Part. mbB
Widenmayerstr. 23
80538 München (DE)

(54) **COMPOSITE POSITIVE ELECTRODE MATERIAL AND PREPARATION METHOD THEREFOR, POSITIVE ELECTRODE SHEET COMPRISING SAME, BATTERY, AND ELECTRIC DEVICE**

(57) The present application provides a composite positive material and a preparation method therefor, a positive electrode plate comprising same, a battery, and an electrical apparatus. The composite positive electrode material comprises a positive electrode active material and a coating layer, wherein the coating layer coats at least part of the surface of the positive electrode active material, the coating layer comprises a composite material, the composite material comprises particles containing elemental M and a lithium-ion conductor material attached onto the surface of the particles containing elemental M, and M comprises at least one of S, Se and Te.

**FIG. 3**

EP 4 723 188 A1

**Description**

**CROSS-REFERENCE TO RELATED APPLICATIONS**

The present application claims priority to Chinese Patent Application 202310703936.X filed on June 14, 2023 and entitled "COMPOSITE POSITIVE ELECTRODE MATERIAL AND PREPARATION METHOD THEREFOR, POSITIVE ELECTRODE PLATE COMPRISING SAME, BATTERY, AND ELECTRICAL APPARATUS", which is incorporated herein by reference in its entirety.

**TECHNICAL FIELD**

The present application relates to the technical field of batteries, in particular to a composite positive material and a preparation method therefor, a positive electrode plate comprising same, a battery, and an electrical apparatus.

**BACKGROUND**

Secondary batteries rely on the reciprocating intercalation and deintercalation of active ions between the positive and negative electrodes for charge and discharge. Secondary batteries represented by lithium-ion batteries have outstanding characteristics such as high energy density, long cycle life, no pollution, and memoryless effect. Therefore, secondary batteries, as a clean energy source, have gradually spread from electronic products to large-scale devices such as electric vehicles in order to meet the sustainable development strategies for the environment and energy.

Among others, energy density is considered to be the biggest bottleneck restricting the current development of secondary batteries. Breakthroughs and innovations in materials are of great significance for achieving the technical goal of high energy density. Nickel-rich ternary positive electrode materials (such as $LiNi_mCo_nM_{1-m-n}O_2$, where $m \geq 0.6$, M is Mn or Al) have become a research hotspot in recent years due to their advantages such as high reversible capacity and low costs. However, the cycling performance and storage performance of nickel-rich ternary positive electrode material system batteries are poor, which limits the application of nickel-rich ternary positive electrode material system batteries.

**SUMMARY**

In order to achieve the above-mentioned objectives, the present application provides a composite positive electrode material, which can improve the cycling performance, storage performance and rate performance of batteries containing the composite positive electrode material; the present application further provides a method for preparing the composite positive electrode material, a positive electrode plate comprising the composite positive electrode material, a battery and an electrical apparatus.

Embodiments of a first aspect of the present application provide a composite positive electrode material, which comprises a positive electrode active material and a coating layer, wherein the coating layer coats at least part of the surface of the positive electrode active material, the coating layer comprises a composite material, the composite material comprises particles containing elemental M and a lithium-ion conductor material attached onto the surface of the particles containing elemental M, and M comprises at least one of S, Se and Te.

Without intending to be bound by any theory or explanation, the composite positive electrode material of the embodiments of the present application comprises a positive electrode active material and a coating layer, the coating layer comprises a composite material, which can effectively improve the cycling performance, storage performance and rate performance of the battery. Specifically, the coating layer of the composite positive electrode material comprises the above-mentioned particles containing elemental M. During the processing or storage of the battery, the coating layer can inhibit the contact between the positive electrode active material and the air, thereby inhibiting the production of residual lithium compounds (RLCs) on the surface; the coating layer of the composite material also comprises a lithium-ion conductor material attached onto the surface of the particles. The lithium-ion conductor material can construct a good ion conductive network at the material level, thereby improving the ion transport rate of the composite positive electrode material. Compared with the technical solution of directly coating the surface of the positive electrode active material with a chalcogen simple substance in the related art, the composite positive electrode material of the embodiments of the present application has the advantage of higher ionic conductivity.

In addition, when the positive electrode active material is a ternary positive electrode material, during battery formation, elemental M can also react with the positive electrode active material, replacing some oxygen atoms on the surface of the positive electrode active material, thereby being doped into the positive electrode active material. Compared with oxygen atoms, M atoms have stronger electronegativity and larger atomic radius, and doping them into positive electrode active materials can not only enhance the ionic conductivity of positive electrode active materials, but also widen the interlayer spacing of positive electrode active materials and inhibit the interlayer migration of lithium ions and transition metals. This can also improve the cycle stability of the positive electrode active material and delay the voltage drop and capacity decay of the battery.

Therefore, the composite positive electrode material of the embodiments of the present application is applied to a secondary battery, which can effectively improve the cycling performance, storage performance and rate performance of the battery.

In any embodiment of the present application, the lithium-ion conductor material includes a lithium-ion conductor material having an ionic conductivity of $1\times10^{-5}$ S/cm or more, and optionally 0.001 S/cm - 1 S/cm.

When the ionic conductivity of the lithium-ion conductor material satisfies the given range, it is not only conducive to improving the ion transport rate of the composite positive electrode material, but also conducive to the reaction of elemental M with the cations on the surface of the positive electrode active material so that it is doped into the positive electrode active material, thereby improving the cycle stability of the positive electrode active material. Therefore, the composite positive electrode material of the embodiments of the present application is applied to a secondary battery, which can further improve the rate performance and cycling performance of the battery.

In any embodiment of the present application, the lithium-ion conductor material includes at least one of lithium zinc germanium oxide, lithium aluminum titanium phosphate, lithium aluminum germanium phosphate, lithium lanthanum titanate, glassy lithium conductive electrolyte powder, and garnet-structured lithium conductive electrolyte powder.

Optionally, the lithium-ion conductor material includes at least one of lithium aluminum titanium phosphate and lithium aluminum germanium phosphate.

The lithium-ion conductor material selected from the above types has suitable ionic conductivity, which can make the coating layer have higher ionic conductivity and make elemental M have higher kinetic reaction rate.

In any embodiment of the present application, the volume distribution particle size Dv50 of the particles containing elemental M is $\leq 2$ $\mu$m, and optionally 0.3 $\mu$m - 1 $\mu$m. This helps the coating layer to more tightly coat the surface of the positive electrode active material, inhibiting the side reaction between the positive electrode active material and the air, thereby inhibiting the generation of RLCs.

Optionally, the volume distribution particle size Dv50 of the lithium-ion conductor material is $\leq 100$ nm, and optionally 20 nm - 50 nm. This can increase the contact area between the lithium-ion conductor material and elemental M and the positive electrode active material, which is conducive to further improving the ion transport rate of the composite positive electrode material and the kinetic reaction rate of elemental M, thereby improving the battery's rate performance and cycling performance.

Optionally, the volume distribution particle size Dv50 of the positive electrode active material is 5 $\mu$m - 15 $\mu$m. Therefore, the composite positive electrode material can have a higher theoretical gram capacity and a suitable ion transport path, which is conducive to improving the capacity of the composite positive electrode material, thereby improving the energy density of the battery.

Optionally, the volume distribution particle size Dv50 of the composite positive electrode material is 8 $\mu$m - 20 $\mu$m. Therefore, the composite positive electrode material can have a suitable ion transport path, which is conducive to improving the ion transport rate of the composite positive electrode material, thereby improving the rate performance of the battery.

In any embodiment of the present application, based on the total mass of the composite positive electrode material, the percentage mass content of the positive electrode active material is 80%-98%, and optionally 90%-95%.

In any embodiment of the present application, based on the total mass of the composite positive electrode material, the percentage mass content of the particles containing elemental M is 0.02%-5%, and optionally 0.05%-2%.

In any embodiment of the present application, based on the total mass of the composite positive electrode material, the percentage mass content of the lithium-ion conductor material is 0.01%-1%, and optionally 0.05%-1%.

When the content of each component in the composite positive electrode material satisfies the given range, the composite positive electrode material can have both higher theoretical gram capacity and higher ionic conductivity, and it can also reduce the risk of generation of RLCs on the surface of the positive electrode active material. In addition, when the content of the lithium-ion conductor material satisfies the given range, the risk of gelation of the positive electrode slurry may be reduced, thereby improving the processability of the composite positive electrode material and further increasing the battery production capacity.

In any embodiment of the present application, the composite material is attached onto the surface of the positive electrode active material through a binder to form the coating layer.

Optionally, the lithium-ion conductor material is attached onto the surface of the particles containing elemental M through the binder.

The composite material is attached onto the surface of the positive electrode active material through the binder, so that the composite material may be firmly anchored onto the surface of the positive electrode active material, thereby improving the interface stability between the coating layer and the positive electrode active material.

In any embodiment of the present application, the binder includes a castor oil-based UV oligomer binder.

Optionally, the castor oil-based UV oligomer binder includes a castor oil-based UV oligomer having a molecular weight of 200 Da - 800 Da.

Castor oil-based UV oligomer binders not only have good bonding properties, but also can form a tight cross-linking network after UV curing, thereby enhancing the cohesion of the positive electrode film layer. In this way, not only the structural stability of the composite positive electrode material may be improved, but also the structural stability of the positive electrode plate may be improved, thereby improving the cycling performance of the battery and extending the cycle life of the battery. In addition, castor oil-based UV oligomer binders also have good conductivity. As a result, the electron transfer rate of the composite positive electrode material may be improved, thereby reducing the bulk impedance of the composite positive electrode material, and in turn improving the battery's cycling performance, storage performance and rate performance.

In any embodiment of the present application, the positive electrode active material comprises a ternary nickel-cobalt-manganese material and/or a ternary nickel-cobalt-aluminum material.

Optionally, in the ternary nickel-cobalt-manganese material, the molar content of element Ni among all the transition metal elements is greater than or equal to 0.6.

Optionally, in the ternary nickel-cobalt-aluminum material, the molar content of element Ni among all the transition metal elements is greater than or equal to 0.6.

The composite positive electrode material of the embodiments of the present application has a specific coating layer, which can inhibit generation of RLCs on the surface of the positive electrode active material and improve the ionic conductivity of the composite positive electrode material. This is conducive to the application of ternary positive electrode active materials with high nickel content in secondary batteries, thereby allowing secondary batteries to have high energy density, good cycling performance, storage performance and rate performance.

Embodiments of a second aspect of the present application provide a method for preparing a composite positive electrode material, comprising: preparing a composite material, which comprises mixing particles containing elemental M with a lithium-ion conductor material, having the lithium-ion conductor material attached onto the surface of the particles containing elemental M to give a composite material, wherein M comprises at least one of S, Se and Te; preparing a composite positive electrode material, which comprises well mixing the composite material with a positive electrode active material, allowing the composite material to coat at least part of the surface of the positive electrode active material to give a composite positive electrode material.

The composite positive electrode material prepared by the method according to the embodiments of the present application comprises a positive electrode active material and a coating layer, the coating layer comprises a composite material, which can effectively improve the cycling performance, storage performance and rate performance of the battery. Specifically, the coating layer of the composite positive electrode material comprises the above-mentioned particles containing elemental M. During the processing or storage of the battery, the coating layer can inhibit the contact between the positive electrode active material and the air, thereby inhibiting generation of RLCs; the coating layer of the composite material also comprises a lithium-ion conductor material attached onto the surface of the particles. The lithium-ion conductor material can construct a good ion conductive network at the material level, thereby improving the ion transport rate of the composite positive electrode material. Compared with the technical solution of directly coating the surface of the positive electrode active material with a chalcogen simple substance in the related art, the composite positive electrode material prepared by the method according to the embodiments of the present application has the advantage of higher ionic conductivity.

In addition, when the positive electrode active material is a ternary positive electrode material, during battery formation, elemental M can also react with the positive electrode active material, replacing some oxygen atoms on the surface of the positive electrode active material, thereby being doped into the positive electrode active material. Compared with oxygen atoms, M atoms have stronger electronegativity and larger atomic radius, and doping them into positive electrode active materials can not only enhance the ionic conductivity of positive electrode active materials, but also widen the interlayer spacing of positive electrode active materials and inhibit the interlayer migration of lithium ions and transition metals. This can also improve the cycle stability of the positive electrode active material and delay the voltage drop and capacity decay of the battery.

Therefore, the composite positive electrode material prepared by the method according to the embodiments of the present application is applied to a secondary battery, which can effectively improve the cycling performance, storage performance and rate performance of the battery.

In any embodiment of the present application, the preparing the composite material comprises: mixing the particles containing elemental M, the lithium-ion conductor material, and a castor oil-based UV oligomer binder and ball milling the mixture to give a slurry containing the composite material.

The preparing the composite positive electrode material comprises: well mixing the slurry and the positive electrode active material, and then curing the castor oil-based UV oligomer binder to coat the composite material onto at least part of the surface of the positive electrode active material to give a composite positive electrode material.

Castor oil-based UV oligomer binders not only have good bonding properties, but also can form a tight cross-linking network after UV curing, thereby enhancing the cohesion of the positive electrode film layer. In this way, not only the structural stability of the composite positive electrode material may be improved, but also the structural stability of the positive electrode plate may be improved, thereby improving the cycling performance of the battery and extending the cycle life of the battery. In addition, castor oil-based UV oligomer binders also have good conductivity. As a result, the electron transfer rate of the composite positive electrode material may be improved, thereby reducing the bulk impedance of the composite positive electrode material, and in turn improving the battery's cycling performance, storage performance and rate performance.

In any embodiment of the present application, the mass ratio of the particles containing elemental M to the lithium-ion conductor material is 1:0.3-1:0.6.

Optionally, the mass ratio of the particles containing elemental M to the castor oil-based UV oligomer binder is 1:0.1-1:0.3.

When the mass ratio of the particles containing elemental M to the lithium-ion conductor material satisfies the given range, an appropriate amount of lithium-ion conductor material may be attached onto the surface of the particles, thereby improving the ionic conductivity of the composite positive electrode material and reducing the risk of generation of RLCs on the surface of the positive electrode active material. In addition, when the mass ratio of the particles to the lithium-ion conductor material satisfies the given range, the risk of gelation of the positive electrode slurry may be reduced, thereby improving the processability of the composite positive electrode material.

Embodiments of a third aspect of the present application provide a positive electrode plate comprising a positive electrode current collector and a positive electrode film layer located on at least one side of the positive electrode current collector, the positive electrode film layer comprises the composite positive electrode material of the first aspect or the composite positive electrode material prepared by the method of the second aspect.

The positive electrode plate of the embodiments of the present application comprises the composite positive electrode material of the first aspect, or the composite positive electrode material prepared by the method of the second aspect, and it is applied to a secondary battery, which can enable the secondary battery to have good cycling performance, storage performance and rate performance.

A fourth aspect of embodiments of the present application provides a battery, comprising the positive electrode plate of the third aspect.

The battery of the embodiments of the present application comprises the positive electrode plate of the third aspect, which can provide good cycling performance, storage performance and rate performance.

A fifth aspect of embodiments of the present application provides an electrical apparatus, comprising the battery of the fourth aspect.

The electrical apparatus in the embodiments of the present application comprises the battery of the fourth aspect, and thus has at least the same advantages as the battery.

## BRIEF DESCRIPTION OF THE DRAWINGS

FIG. 1 is a schematic structural view of a composite positive electrode material in an embodiment of the present application.

FIG. 2 is a schematic structural view of a composite positive electrode material in another embodiment of the present application.

FIG. 3 is a schematic view of an embodiment of a battery cell of the present application.

FIG. 4 is an exploded view of the embodiment of the battery cell of the present application shown in FIG. 3.

FIG. 5 is a schematic view of an embodiment of a battery module of the present application.

FIG. 6 is a schematic view of an embodiment of a battery pack of the present application.

FIG. 7 is an exploded view of the embodiment of the battery pack of the present application shown in FIG. 6.

FIG. 8 is a schematic view of an embodiment of an electrical apparatus of the present application, wherein the electrical apparatus comprises the battery pack or battery module of the embodiments of the present application as the power source.

100 Composite positive electrode material; 110 Positive electrode active material; 120 Coating layer; 121 Composite material; 121a Particles containing elemental M; 121b Lithium-ion conductor material; 121c Castor oil-based UV oligomer binder; 1 Battery pack; 2 Upper box; 3 Lower box; 4 Battery module; 5 Battery cell; 51 Case; 52 Electrode assembly; 53 Cover plate.

## DETAILED DESCRIPTION

Embodiments of the composite positive electrode material and preparation method therefor, positive electrode plate comprising same, battery, and electrical apparatus according to the present application are specifically disclosed below with appropriate reference to the detailed description of the drawings. However, there may be situations where unnecessary detailed explanations are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit may be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application may be combined with each other form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, any one of the following conditions satisfies the condition "A or B": A is true (or present) and B is false (or absent); A is false (or absent) and B is true (or present); or both A and B are true (or present).

Unless otherwise stated, numerical values of parameters mentioned in the present application may be measured using various testing methods commonly used in the art. For example, the numerical values may be measured according to testing methods given in the embodiments of the present application. Unless otherwise stated, test temperatures for parameters are 25°C.

Unless otherwise specified, all ratio parameters involved in the present application are compared with the same units. For example, the thickness ratio of A to B is 1.2:1, and the thickness units of A and B are the same.

With the application and promotion of secondary batteries in various electronic products and new-energy vehicles and other industries, higher requirements have been placed on the energy density of secondary batteries.

Nickel-rich ternary positive electrode materials (such as $LiNi_mCo_nM_{l-m-n}O_2$, where m≥0.6, M is Mn or Al) have become a research hotspot in recent years due to their advantages such as high reversible capacity and low costs. The related art has involved nickel-rich ternary positive electrode materials with a nickel content of more than 90%, such as $LiNi_{0.9}Mn_{0.1}O_2$ and $LiNi_{0.95}Co_{0.025}Mn_{0.025}O_2$, and achieved very impressive initial discharge specific capacity.

However, nickel-rich ternary positive electrode materials are prone to produce residual lithium compounds (RLCs) on their surface. RLCs not only have no electrochemical activity, but also hinder the diffusion of Li+ and electrons, thereby limiting the capacity of nickel-rich ternary positive electrode materials, aggravating the growth of the battery's internal resistance, and worsening the battery's cycling performance and storage performance.

The related art involves modifying nickel-rich ternary positive electrode materials to remove RLCs on their surface and inhibit the subsequent formation of RLCs. Among others, surface coating is one of the commonly used modification strategies. Surface coating can inhibit the contact between the nickel-rich ternary positive electrode material and the air by forming a coating layer on the surface of the nickel-rich ternary positive electrode material, thereby inhibiting the formation of RLCs.

However, the coating layer involved in the related art has low ionic conductivity, which leads to a decrease in the rate performance of the battery.

In view of this, an embodiment of the present application provides a composite positive electrode material, which can improve the cycling performance, storage performance and rate performance of batteries containing the composite positive electrode material; the present application further provides a method for preparing the composite positive electrode material, a positive electrode plate comprising the composite positive electrode material, a battery and an electrical apparatus.

**Composite positive electrode material**

The embodiments of the first aspect of the present application provide a composite positive electrode material, the composite positive electrode material comprises a positive electrode active material and a coating layer, and the coating layer coats at least part of the surface of the positive electrode active material. The coating layer comprises a composite material, the composite material comprises particles containing elemental M and a lithium-ion conductor material attached onto the surface of the particles containing elemental M, and M comprises at least one of S, Se and Te.

Studies have shown that chalcogen simple substances, such as S, Se and Te, have strong reducibility. The transition metals in nickel -rich ternary positive electrode materials exist in the form of cations. When cations such as $Ni^{3+}$, $Ni^{2+}$, $Co^{3+}$, and $Mn^{4+}$ come into contact with chalcogen simple substances, the chalcogen simple substances can react with these cations to form electrochemically stable compounds (such as $Li_2SO_3$, $Li_2SO_4$), thereby forming the coating layer. Therefore, on the one hand, the additional $Li^+$ released by the reaction of chalcogen simple substances may be used to compensate for the loss of active lithium ions caused by the formation of SEI film during the first charge-discharge cycle; on the other hand, the generated electrochemically stable compounds can play a similar role to the CEI film, improving the stability of the positive electrode environment. However, the above electrochemically stable compounds, such as $Li_2SO_3$ and $Li_2SO_4$, still have the defect of low ionic conductivity, which makes it difficult to improve the rate performance of the battery.

Without intending to be bound by any theory or explanation, the composite positive electrode material of the embodiments of the present application comprises a positive electrode active material and a coating layer, the coating layer comprises a composite material, which can effectively improve the cycling performance, storage performance and rate performance of the battery. Specifically, the coating layer of the composite positive electrode material comprises the above-mentioned particles containing elemental M. During the processing or storage of the battery, the coating layer can inhibit the contact between the positive electrode active material and the air, thereby inhibiting generation of RLCs; the coating layer of the composite material also comprises a lithium-ion conductor material attached onto the surface of the particles containing elemental M. The lithium-ion conductor material can construct a good ion conductive network at the material level, thereby improving the ion transport rate of the composite positive electrode material. Compared with the technical solution of directly coating the surface of the positive electrode active material with a chalcogen simple substance in the related art, the composite positive electrode material of the embodiments of the present application has the advantage of higher ionic conductivity.

In addition, when the positive electrode active material is a ternary positive electrode material, during battery formation, elemental M can also react with the positive electrode active material, replacing some oxygen atoms on the surface of the positive electrode active material, thereby being doped into the positive electrode active material. Compared with oxygen atoms, M atoms have stronger electronegativity and larger atomic radius, and doping them into positive electrode active materials can not only enhance the ionic conductivity of positive electrode active materials, but also widen the interlayer spacing of positive electrode active materials and inhibit the interlayer migration of lithium ions and transition metals. This can also improve the cycle stability of the positive electrode active material and delay the voltage drop and capacity decay of the battery.

Therefore, the composite positive electrode material of the embodiments of the present application is applied to a secondary battery, which can effectively improve the cycling performance, storage performance and rate performance of the battery.

In the embodiments of the present application, the positive electrode active material may be one or more of nickel-containing lithium transition metal oxides and modified compounds thereof for secondary batteries known in the art. Examples of the nickel-containing lithium transition metal oxide may include, but are not limited to, one or more of lithium nickel oxide, lithium nickel cobalt oxide, lithium nickel manganese oxide, lithium nickel cobalt manganese oxide, lithium nickel cobalt aluminum oxide, and modified compounds thereof with a nickel content of 0.6 or more. The above-mentioned "a nickel content of 0.6 or more" may mean that the molar content of element Ni is greater than or equal to 0.6 based on the total molar weight of the transition metal elements in the nickel-containing lithium transition metal oxide. For example, for lithium nickel cobalt manganese oxide, "a nickel content of 0.6 or more" may mean that the molar weight of element Ni/(molar weight of element Ni + molar weight of element Co + molar weight of element Mn) is ≥0.6.

In the embodiments of the present application, the lithium-ion conductor material may refer to a substance having ionic conductivity, and specifically may include a fast ion conductor material whose conductive ions are lithium. Examples of the lithium-ion conductor material may include one or more lithium-ion conductor materials known in the art, without limitation herein.

In the embodiments of the present application, the lithium-ion conductor material is attached onto the surface of the particle containing elemental M, which may mean that the lithium-ion conductor material is anchored onto the surface of the particle through interaction with the surface of the particle containing elemental M, or is anchored onto the surface of the particle containing elemental M through the action of a binder. For example, the lithium-ion conductor material may be attached onto the surface of the particle containing elemental M through chemical bonding or hydrogen bonding, or the lithium-ion conductor material may be attached onto the surface of the particle containing elemental M through a binder.

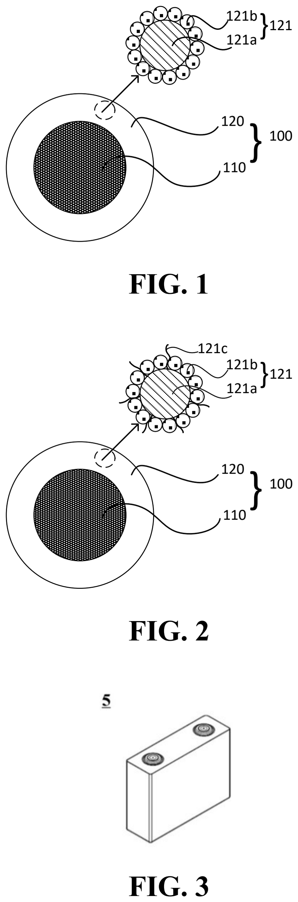

FIG. 1 illustrates a schematic structural view of a composite positive electrode material in an embodiment of the present application. As shown in FIG. 1, a composite positive electrode material 100 may comprise a positive electrode active material 110 and a coating layer 120, the coating layer 120 coats at least part of the surface of the positive electrode active material 110. The coating layer 120 may comprise a composite material 121, the composite material 121 may comprise particles 121a containing elemental M and a lithium-ion conductor material 121b. The lithium-ion conductor material 121b may be attached onto the surface of the particles 121a containing elemental M. In some embodiments, the lithium-ion conductor material 121b may be attached onto the surface of the particles 121a containing elemental M to form a coating layer coating at least part of the surface of the particles 121a containing elemental M.

The structure of the composite positive electrode material provided in the embodiments of the present application may be characterized by devices and methods known in the art. For example, the composite positive electrode material may be subjected to argon ion cross-section polishing treatment, and the cross-section EDS element surface distribution map of the composite positive electrode material may be measured by an EDS spectrometer. The structure of the composite positive electrode material may be determined based on the element distribution in the EDS element surface distribution map.

In some embodiments, the lithium-ion conductor material may include a lithium-ion conductor material having an ionic conductivity of $1\times10^{-5}$ S/cm or more. For example, the lithium-ion conductor material may include a lithium-ion conductor material having an ionic conductivity of $1\times10^{-5}$ S/cm or more, $1\times10^{-4}$ S/cm or more, 0.001 S/cm or more, 0.1 S/cm or more, or 1 S/cm or more.

Optionally, in some embodiments, the lithium-ion conductor material may include a lithium-ion conductor material having an ionic conductivity of 0.001 S/cm - 1 S/cm. For example, the lithium-ion conductor material may include a lithium-ion conductor material having an ionic conductivity of 0.001 S/cm, 0.005 S/cm, 0.01 S/cm, 0.15 S/cm, 0.2 S/cm, 0.5 S/cm, 0.8 S/cm, 1 S/cm, or a range consisting of any two of the foregoing values.

Without intending to be bound by any theory or explanation, when the ionic conductivity of the lithium-ion conductor material satisfies the given range, the ionic conductivity of the coating layer and the kinetic reaction rate of elemental M may be improved. Thus, it is not only conducive to improving the ion transport rate of the composite positive electrode material, but also conducive to the reaction of elemental M with the cations on the surface of the positive electrode active material so that it is doped into the positive electrode active material, thereby improving the cycle stability of the positive electrode active material. Therefore, the composite positive electrode material of the embodiments of the present application is applied to a secondary battery, which can further improve the rate performance and cycling performance of the battery.

Ionic conductivity has the meaning commonly known in the art and may be determined by devices and methods known in the art. For example, the ionic conductivity of lithium-ion conductor materials may be determined by its electrochemical impedance spectrum (EIS). Specifically, an appropriate amount of lithium-ion conductor material may be placed between two stainless steel sheets as a blocking electrode to form a symmetrical battery; the electrochemical workstation used may be DH7001, the frequency range may be 0.01Hz-106Hz, and the EIS of the lithium-ion conductor material at 25°C is tested. The ionic conductivity is calculated using the following formula: $\delta = L/(R\cdot S)$, where $\delta$ is the ionic conductivity (in S/cm), L is the thickness of the lithium-ion conductor material between the two stainless steel sheets (in cm), R is the intrinsic resistance of the lithium-ion conductor material (in $\Omega$), and S is the effective cross-sectional area of the lithium-ion conductor material (in $cm^2$).

In some embodiments, the lithium-ion conductor material may include at least one of lithium zinc germanium oxide (LISICON-structured lithium conductive ceramic powder), lithium aluminum titanium phosphate (LATP), lithium aluminum germanium phosphate (LAGP), lithium lanthanum titanate, glassy lithium conductive electrolyte powder, and garnet-structured lithium conductive electrolyte powder.

Optionally, in some embodiments, the lithium-ion conductor material may include at least one of lithium aluminum titanium phosphate (LAGP) and lithium aluminum germanium phosphate (LAGP).

Without intending to be bound by any theory or explanation, the lithium-ion conductor material selected from the above types has suitable ionic conductivity, which can make the coating layer have higher ionic conductivity and make elemental M have higher kinetic reaction rate. Thereby, the rate performance and cycling performance of the battery may be further improved.

In some embodiments, the volume distribution particle size Dv50 of the particles containing elemental M is ≤2 μm, and for example, it may be 2 μm, 1.8 μm, 1.5 μm, 1.2 μm, 1 μm, 800 nm, 500 nm, 300 nm, 200 nm, or a range defined by any two of the above numerical values.

Optionally, in some embodiments, the volume distribution particle size of the particles can also be 0.3 μm - 1 μm, 0.3 μm - 0.8 μm, 0.3 μm - 0.5 μm, 0.4 μm - 1 μm, 0.4 μm - 0.8 μm, 0.4 μm - 0.6 μm, 0.5 μm - 1 μm, and the like.

Without intending to be bound by any theory or explanation, when the particles containing elemental M have the aforementioned smaller volume distribution particle size, they generally have a larger specific surface area, thereby increasing the contact area between the composite material and the positive electrode active material. This helps the coating layer to more tightly coat the surface of the positive electrode active material, inhibiting the side reaction between the positive electrode active material and the air, thereby inhibiting the generation of RLCs. Therefore, the composite positive electrode material of the embodiments of the present application is applied to a secondary battery, which can improve the cycling performance and storage performance of the battery.

In some embodiments, the volume distribution particle size Dv50 of the lithium-ion conductor material is ≤100 nm. For example, it may be 100 nm, 90 nm, 80 nm, 70 nm, 60 nm, 50 nm, 40 nm, 30 nm, 20 nm, 10 nm, or a range defined by any two of the above numerical values.

Optionally, in some embodiments, the volume distribution particle size of the lithium-ion conductor material may be 20 nm - 50 nm. For example, it may be 20 nm, 22 nm, 25 nm, 28 nm, 30 nm, 33 nm, 36 nm, 39 nm, 40 nm, 41 nm, 44 nm, 47 nm, or 50 nm, or a range defined by any two of the above numerical values.

Without intending to be bound by any theory or explanation, when the lithium-ion conductor material has the aforementioned smaller volume distribution particle size, it generally has a larger specific surface area, thereby increasing the contact area between the lithium-ion conductor material and elemental M as well as the positive electrode active material. This is conducive to further improving the ion transport rate of the composite positive electrode material and the kinetic reaction rate of elemental M, thereby improving the rate performance and cycling performance of the battery.

In some embodiments, the volume distribution particle size Dv50 of the positive electrode active material may be 5 μm - 15 μm, for example, it may be 5 μm, 6 μm, 7 μm, 8 μm, 9 μm, 10 μm, 11 μm, 12 μm, 13 μm, 14 μm, 15 μm, or a range defined by any two of the above numerical values.

Without intending to be limited by any theory or explanation, when the volume distribution particle size of the positive electrode active material is within the above suitable range, the composite positive electrode material can have a higher theoretical gram capacity and an appropriate lithium ion transport path. This is conducive to improving the capacity of the composite positive electrode material, thereby improving the energy density of the battery.

In some embodiments, the volume distribution particle size Dv50 of the composite positive electrode material may be 8 μm - 20 μm, for example, it may be 8 μm, 9 μm, 10 μm, 11 μm, 12 μm, 13 μm, 14 μm, 15 μm, 16 μm, 17 μm, 18 μm, 19 μm, 20 μm, or a range defined by any two of the above numerical values.

Without intending to be limited by any theory or explanation, when the volume distribution particle size of the composite positive electrode material is within the above-mentioned suitable range, it can have a suitable ion transport path, thereby facilitating the improvement of the ion transport rate of the composite positive electrode material. Thereby, the rate performance of the battery may be further improved.

The volume distribution particle size Dv50 has the meaning well known in the art, and it can represent the particle size when the cumulative volume distribution percentage of the material reaches 50%. The volume distribution particle size Dv50 may be determined by devices and methods known in the art. The volume distribution particle sizes Dv50 can all be determined by laser diffraction particle size analysis. For example, it may be determined by using a laser particle size analyzer (such as Malvern Master Size 3000) with reference to the standard GB/T 19077-2016.

In some embodiments, based on the total mass of the composite positive electrode material, the percentage mass content of the positive electrode active material may be 80%-98%, and optionally 90%-95%.

In some embodiments, based on the total mass of the composite positive electrode material, the percentage mass content of the particles containing elemental M may be 0.02%-5%, and optionally 0.05%-2%.

In some embodiments, based on the total mass of the composite positive electrode material, the percentage mass content of the lithium-ion conductor material may be 0.01%-1%, and optionally 0.05%-1%.

Without intending to be limited by any theory or explanation, when the content of each component in the composite positive electrode material satisfies the given range, the composite positive electrode material can have both higher theoretical gram capacity and higher ionic conductivity, and it can also reduce the risk of generation of RLCs on the surface of the positive electrode active material. In addition, when the content of the lithium-ion conductor material satisfies the given range, the risk of gelation of the positive electrode slurry may be reduced, thereby improving the processability of the composite positive electrode material and further increasing the battery production capacity.

The percentage mass contents of the positive electrode active material, particles containing elemental M and lithium-ion conductor material in the composite positive electrode material may be measured by devices and methods known in the art, for example, by inductively coupled plasma emission spectrometry (ICP). Specifically, elemental analysis can then be carried out by inductively coupled plasma emission spectrometry (ICP, Ametek, model: SPECTROARCOSICP-OES) with reference to the standard YS/T1006.2-2014, GB/T23367.2-2009, or YS/T1028.5-2015 to determine the composition of the elements of the composite positive electrode material and their contents, thereby determining the percentage mass contents of the positive electrode active material, particles, and lithium-ion conductor material.

In some embodiments, the composite material may be attached onto the surface of the positive electrode active material through a binder to form the coating layer.

Optionally, in some embodiments, the lithium-ion conductor material may be attached onto the surface of the particles containing elemental M through a binder.

Thus, it is conducive to further reducing the risk of generation of RLCs on the surface of the positive electrode active material, as well as enhancing the cycle stability of the composite positive electrode material. This, in turn, can improve the cycling performance and storage performance of the battery.

Examples of the binder may include one or more binders known in the art, for example, including but not limited to at least one of polyvinylidene fluoride, polytetrafluoroethylene, sodium carboxymethyl cellulose, and styrene butadiene rubber. Those skilled in the art can select a suitable binder according to the needs of actual application, provided that the composite material may be attached onto the surface of the positive electrode active material to form a coating layer, which is not limited here.

In some embodiments, the binder may include a castor oil-based UV oligomer binder.

Optionally, the castor oil-based UV oligomer binder may include a castor oil-based UV oligomer having a molecular weight of 200 Da - 800 Da.

Without intending to be bound by any theory or explanation, castor oil-based UV oligomer binders have excellent bonding properties, which can not only enable the lithium-ion conductor material to be tightly attached onto the surface of the particles containing elemental M and firmly anchor the composite material onto the surface of the positive electrode active material, but also enable the composite positive electrode material to have good bonding strength with the positive electrode current collector. In addition, castor oil-based UV oligomer binders can form a tight cross-linking network after UV curing, thereby enhancing the cohesion of the positive electrode film layer. In this way, not only the structural stability of the composite positive electrode material may be improved, but also the structural stability of the positive electrode plate may be improved, thereby improving the cycling performance of the battery and extending the cycle life of the battery. In addition, castor oil-based UV oligomer binders also have good conductivity. As shown in FIG. 2, the castor oil-based UV oligomer binder 121c may be distributed between particles of the lithium-ion conductor material 121b and between the composite material 121 and the positive electrode active material 110, forming a network having both bonding properties and conductivity. As a result, the electron transfer rate of the composite positive electrode material may be improved, thereby reducing the bulk impedance of the composite positive electrode material, and in turn improving the battery's cycling performance, storage performance and rate performance.

The aforementioned molecular weight has the meaning commonly known in the art and may be determined by devices and methods known in the art. For example, it may be measured by using a mass spectrometer with reference to the test standard GB/T 6041-2020.

In the embodiments of the present application, the castor oil-based UV oligomer binder is a substance known in the art, which may include a castor oil-based UV oligomer, a photoinitiator, and optional additives. The castor oil-based UV oligomer binder may be obtained in various ways, for example, it may be purchased commercially or prepared by methods known in the art.

As an example, the castor oil-based UV oligomer binder may be prepared by the following steps (1) to (3).

(1) Using a reactive diluent, isocyanate, and castor oil as raw materials, the reaction is carried out until the mass fraction of the isocyanate group in the feed reaches half of the theoretical value before the start of the reaction, thereby obtaining a semi-blocked isocyanate intermediate.

In step (1), the reaction temperature and time are not particularly limited and may be adjusted by those skilled in the art according to the reaction materials, feed amount, etc. As an example, the reaction temperature may be 30°C-70°C, and the reaction time may be 2 h - 7 h. The reactive diluent may be selected from at least one of isobornyl methacrylate (IBOMA), tripropylene glycol diacrylate (TPGDA), and 1,6-hexanediol diacrylate (HDDA). The isocyanate may be selected from isocyanates known in the art. In some embodiments, the isocyanate may include one or more diisocyanates. In some embodiments, the molar ratio of isocyanate to castor oil may be (2.7:1) - (2.9:1), and the amount of the reactive diluent used may be 10%-40% of the total mass of the reaction materials in step (1).

(2) The semi-blocked isocyanate intermediate is mixed with hydroxy acrylate, an antioxidant is added, and the semi-blocked isocyanate intermediate is allowed to react with hydroxy acrylate until the isocyanate group content is less than 0.5%, and anhydrous ethanol is added for blocking to give a castor oil-based polyurethane acrylic resin.

In step (2), the reaction temperature and time are not particularly limited and may be adjusted by those skilled in the art according to the reaction materials, feed amount, etc. As an example, the reaction temperature may be 70°C-100°C, and the reaction time may be 4 h - 9 h. In some embodiments, the hydroxy acrylate may include at least one of hydroxyethyl acrylate (HEA), hydroxypropyl acrylate (HPA), and hydroxypropyl methacrylate (HPMA); and the molar ratio of the isocyanate to the hydroxy acrylate may be (1:1.05) - (1:1.2). The antioxidant may include any one of 2,6-di-tert-butyl-p-cresol (antioxidant 264), pentaerythritol ester (antioxidant 1000), and octadecyl 3,5-di-tert-butyl-4-hydroxyphenylpropionate (antioxidant 1076), and its amount used may be 0.1%-0.5% of the total mass of the reaction materials.

(3) The castor oil-based polyurethane acrylic resin, a photoinitiator, a dispersant and a leveling agent are mixed, well stirred at 30°C-50°C in the dark, a pigment and a defoaming agent are added, and the mixture is well mixed to give the castor oil-based UV oligomer binder.

In step (3), the amounts of the castor oil-based polyurethane acrylic resin, photoinitiator, dispersant and leveling agent added are not specifically limited and may be adjusted as needed by those skilled in the art. As an example, the mass ratio of the castor oil-based polyurethane acrylic resin, photoinitiator, dispersant, leveling agent, pigment and defoaming agent may be (80-90):(3-7):(0.1-1):(0.1-1):(1-5):(0.1-0.5).

As another example, castor oil-based UV oligomer binders can also be prepared by a one-pot two-step method. The castor oil-based UV oligomer prepared by the one-pot two-step method has a narrow molecular weight distribution and can have suitable viscosity, excellent bonding properties and good conductivity. The one-pot two-step method may specifically comprising the following steps (4) to (6).

(4) 30-50 parts by mass of diisocyanate and 40-50 parts by mass of castor oil are well mixed, and the mixture is heated to 40-50°C and allowed to react for 2 h - 4 h to give an intermediate.

(5) 20 parts by mass to 30 parts by mass of hydroxy acrylate, a catalyst of 0.05%-0.15% of the total mass of the reaction materials, and an antioxidant of 0.05%-0.2% of the total mass of reaction materials are added to the intermediate, the mixture is heated to 70°C-80°C, allowed to react for 3 h - 4 h, then anhydrous ethanol of 3%-5% of the total mass of the reaction materials is added, and the mixture is well stirred to give a mixture containing castor oil-based UV oligomers. The diisocyanate may include one or more diisocyanates known in the art, for example, it may include at least one of isophorone diisocyanate (IPDI), toluene diisocyanate (TDI), diphenylmethane diisocyanate (MDI), p-phenylene diisocyanate (PPDI), and cyclohexane dimethylene diisocyanate (HXDI). The hydroxy acrylate may include at least one of hydroxyethyl acrylate, hydroxypropyl acrylate, and hydroxypropyl methacrylate. The catalyst may include at least one of dibutyltin dilaurate, triethanolamine, bismuth naphthenate, cobalt octoate, and triethylenediamine. The antioxidant may include hydroquinone and/or 2,6-di-tert-butyl-p-cresol.

(6) The above mixture, a photoinitiator, a dispersant and a leveling agent are mixed, well stirred at 30°C-50°C in the dark, a pigment and a defoaming agent are added, and the mixture is well mixed to give the castor oil-based UV oligomer binder.

In step (6), the amounts of the mixture, photoinitiator, dispersant and leveling agent added are not specifically limited and may be adjusted as needed by those skilled in the art. As an example, the mass ratio of the mixture, photoinitiator, dispersant, leveling agent, pigment and defoaming agent may be (80-90):(3-7):(0.1-1):(0.1-1):(1-5):(0.1-0.5).

In some embodiments, the positive electrode active material may include a ternary nickel-cobalt-manganese material and/or a ternary nickel-cobalt-aluminum material.

Optionally, in the ternary nickel-cobalt-manganese material, the molar content of element Ni among all the transition metal elements is greater than or equal to 0.6.

Optionally, in the ternary nickel-cobalt-aluminum material, the molar content of element Ni among all the transition metal elements is greater than or equal to 0.6.

Without intending to be limited by any theory or explanation, the composite positive electrode material of the embodiments of the present application has a specific coating layer, which can inhibit generation of RLCs on the surface of the positive electrode active material and improve the ionic conductivity of the composite positive electrode material. This is conducive to the application of ternary positive electrode active materials with high nickel content in secondary batteries, thereby allowing secondary batteries to have high energy density, good cycling performance, storage performance and rate performance.

**Preparation method**

In the second aspect, the embodiments of the present application provides a method for preparing a composite positive electrode material, comprising the following steps S10 to S20.

S10, preparing a composite material, comprising mixing particles containing elemental M with a lithium-ion conductor material, and having the lithium-ion conductor material attached onto the surface of the particles containing elemental M to give a composite material, wherein M comprises at least one of S, Se and Te.

In step S10, the lithium-ion conductor material may be attached onto the surface of the particles containing elemental M in a variety of ways. For example, the particles containing elemental M may be mixed with the lithium-ion conductor material and ball-milled to make the lithium-ion conductor material attached onto the surface of the particles containing elemental M, or the particles containing elemental M may be mixed with the lithium-ion conductor material and a binder and ball-milled to make the lithium-ion conductor material attached onto the surface of the particles containing elemental M through the binder. Those skilled in the art may select an appropriate method according to actual needs, which is not limited here. The lithium-ion conductor material may be selected from the lithium-ion conductor material according to the first aspect. The embodiments of the lithium-ion conductor material have been described and illustrated in detail above and will not be repeated here.

S20, preparing a composite positive electrode material, comprising well mixing the composite material and a positive electrode active material, and coating the composite material onto at least part of the surface of the positive electrode active material to give a composite positive electrode material.

In step S20, coating the composite material onto at least part of the surface of the positive electrode active material may be achieved in various ways. In some embodiments, the composite material, the positive electrode active material, and the binder may be well mixed so that the composite material is attached onto at least part of the surface of the positive electrode active material through the binder, thereby forming a coating layer. In some embodiments, the composite material and/or the positive electrode active material may be modified so that the composite material is attached onto at least part of the surface of the positive electrode active material through chemical bonding, thereby forming a coating layer. Those skilled in the art can select a suitable embodiment according to the needs of actual application, provided that the composite material may be attached onto the surface of the positive electrode active material to form a coating layer, which is not limited here.

The composite positive electrode material prepared by the method according to the embodiments of the present application comprises a positive electrode active material and a coating layer, the coating layer comprises a composite material, which can effectively improve the cycling performance, storage performance and rate performance of the battery. Specifically, the coating layer of the composite positive electrode material comprises the above-mentioned particles containing elemental M. During the processing or storage of the battery, the coating layer can inhibit the contact between the positive electrode active material and the air, thereby inhibiting generation of RLCs; the coating layer of the composite material also comprises a lithium-ion conductor material attached onto the surface of the particles containing elemental M. The lithium-ion conductor material can construct a good ion conductive network at the material level, thereby improving the ion transport rate of the composite positive electrode material. Compared with the technical solution of directly coating the surface of the positive electrode active material with a chalcogen simple substance in the related art, the composite positive electrode material prepared by the method according to the embodiments of the present application has the advantage of higher ionic conductivity.

In addition, when the positive electrode active material is a ternary positive electrode material, during battery formation, elemental M can also react with the positive electrode active material, replacing some oxygen atoms on the surface of the positive electrode active material, thereby being doped into the positive electrode active material. Compared with oxygen atoms, M atoms have stronger electronegativity and larger atomic radius, and doping them into positive electrode active materials can not only enhance the ionic conductivity of positive electrode active materials, but also widen the interlayer spacing of positive electrode active materials and inhibit the interlayer migration of lithium ions and transition metals. This can also improve the cycle stability of the positive electrode active material and delay the voltage drop and capacity decay of the battery.

Therefore, the composite positive electrode material prepared by the method according to the embodiments of the present application is applied to a secondary battery, which can effectively improve the cycling performance, storage performance and rate performance of the battery.

In some embodiments, the preparing the composite material may specifically comprise: mixing particles containing elemental M, a lithium-ion conductor material, and a castor oil-based UV oligomer binder and ball milling the mixture to give a slurry containing the composite material.

The preparing the composite positive electrode material may specifically comprise: well mixing the slurry and the positive electrode active material, and then curing the castor oil-based UV oligomer binder to coat the composite material onto at least part of the surface of the positive electrode active material to give a composite positive electrode material.

The castor oil-based UV oligomer binder may be selected from the castor oil-based UV oligomer binders according to the first aspect. The embodiments of the castor oil-based UV oligomer binder have been described and illustrated in detail above and will not be repeated here.

Castor oil-based UV oligomer binders not only have good bonding properties, but also can form a tight cross-linking network after UV curing, thereby enhancing the cohesion of the positive electrode film layer. In this way, not only the structural stability of the composite positive electrode material may be improved, but also the structural stability of the positive electrode plate may be improved, thereby improving the cycling performance of the battery and extending the cycle life of the battery. In addition, castor oil-based UV oligomer binders also have good conductivity. As a result, the electron transfer rate of the composite positive electrode material may be improved, thereby reducing the bulk impedance of the composite positive electrode material, and in turn improving the battery's cycling performance, storage performance and rate performance.

In some embodiments, the mass ratio of the particles containing elemental M to the lithium-ion conductor material may be 1:0.3-1:0.6.

Without intending to be limited by any theory or explanation, when the mass ratio of the particles containing elemental M to the lithium-ion conductor material satisfies the given range, an appropriate amount of lithium-ion conductor material may be attached onto the surface of the particles containing elemental M, thereby improving the ionic conductivity of the composite positive electrode material and reducing the risk of generation of RLCs on the surface of the positive electrode active material. In addition, when the mass ratio of the particles containing elemental M to the lithium-ion conductor material satisfies the given range, the risk of gelation of the positive electrode slurry may be reduced, thereby improving the processability of the composite positive electrode material.

In some embodiments, the mass ratio of the particles containing elemental M to the castor oil-based UV oligomer binder may be 1:0.1-1:0.3.

Without intending to be bound by any theory or explanation, when the mass ratio of the particles to the castor oil-based UV oligomer binder satisfies the given range, the lithium-ion conductor material may be tightly attached onto the surface of the particles containing elemental M, and the composite material may be firmly anchored to the surface of the positive electrode active material, thereby improving the structural stability of the composite positive electrode material and reducing the bulk impedance of the composite positive electrode material. Thereby, the cycling performance, storage performance and rate performance of the battery may be further improved.

**Positive electrode plate**

The third aspect of the embodiments of the present application provides a positive electrode plate comprising a positive electrode current collector and a positive electrode film layer located on at least one side of the positive electrode current collector. The positive electrode film layer includes the composite positive electrode material of the first aspect, or the composite positive electrode material prepared by the method of the second aspect.

The positive electrode plate of the embodiments of the present application comprises the composite positive electrode material of the first aspect, or the composite positive electrode material prepared by the method of the second aspect, and it is applied to a secondary battery, which can enable the secondary battery to have good cycling performance, storage performance and rate performance.

In some embodiments, the positive electrode film layer further optionally comprises a positive electrode conductive agent. In the present application, the type of the positive electrode conductive agent is not particularly limited. As an example, the positive electrode conductive agent includes at least one of superconducting carbon, conductive graphite, acetylene black, carbon black, Ketjen black, carbon dots, carbon nanotubes, graphene, and carbon nanofibers.

In some embodiments, the positive electrode film layer further optionally comprises a positive electrode binder. In the present application, the type of the positive electrode binder is not particularly limited. As an example, the positive electrode binder can include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode current collector may be a metal foil or a composite current collector. As an example of the metal foil, an aluminum foil may be used. The composite current collector may include a high molecular material substrate layer and a metal material layer formed on at least one surface of the high molecular material substrate layer. By way of example, the metal material may include at least one of aluminum, an aluminum alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The positive electrode film layer is usually formed by coating the positive electrode current collector with a positive electrode slurry, followed by drying and cold pressing. The positive electrode slurry is generally formed by dispersing the positive electrode active material, the optional conductive agent, the optional binder and any other components in a solvent and sufficiently stirring the mixture. The solvent may be N-methyl pyrrolidone (NMP), but is not limited thereto.

**Battery**

The battery mentioned in the embodiments of the present application may be a single physical module comprising one or more battery cells to provide a higher voltage and capacity. When there are a plurality of battery cells, the plurality of battery cells are connected by series connection, or parallel connection, or parallel-series connection through a bus component.

Generally, the battery cell comprises an electrode assembly and an electrolyte. The electrode assembly comprises a positive electrode, a negative electrode, and a separator. During charging and discharging of the battery cell, active ions (such as lithium ions) are intercalated and deintercalated back and forth between the positive electrode and the negative electrode. The separator is arranged between the positive electrode and the negative electrode, and can function to prevent a short circuit between the positive electrode and the negative electrode while enabling the active ions to pass through. The electrolyte serves to conduct active ions between the positive electrode plate and the negative electrode plate.

[Positive electrode plate]

In the battery cell of the embodiments of the present application, the positive electrode plate of the electrode assembly may include the positive electrode plate of the third aspect. The embodiments of the positive electrode plate have been described and illustrated in detail above and will not be repeated here. It may be understood that the battery cell of the embodiments of the present application can achieve the beneficial effects of any of the above-mentioned embodiments of the positive electrode plate of the embodiments of the present application.

[Negative electrode plate]

The negative electrode plate can include a negative electrode current collector and a negative electrode film layer arranged on at least one side of the negative electrode current collector and comprising a negative electrode active material. For example, the negative electrode current collector has two surfaces opposite in its own thickness direction, and the negative electrode film layer is disposed on either or both of the two opposite surfaces of the negative electrode current collector.

The positive electrode active material may be a negative electrode active material for a secondary battery well-known in the art. By way of example, the negative electrode active material may include, but is not limited to, at least one of natural graphite, artificial graphite, soft carbon, hard carbon, a silicon-based material, a tin-based material, and lithium titanate. The silicon-based material may include at least one of elemental silicon, silicon oxide, a silicon-carbon composite, a silicon-nitrogen composite, and a silicon alloy material. The tin-based material may include at least one of elemental tin, tin oxide, and a tin alloy material.

In some embodiments, the negative electrode film layer further optionally comprises a negative electrode conductive agent. In the present application, the type of the negative electrode conductive agent is not particularly limited. By way of example, the negative electrode conductive agent can include at least one of superconducting carbon, conductive graphite, acetylene black, carbon black, Ketjen black, carbon dots, carbon nanotubes, graphene, and carbon nanofibers.

In some embodiments, the negative electrode film layer further optionally comprises a negative electrode binder. In the present application, the type of the negative electrode binder is not particularly limited. By way of example, the negative electrode binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS).

In some embodiments, the negative electrode film layer further optionally comprises other auxiliaries. As an example, the other auxiliaries may include thickeners, such as, carboxymethyl cellulose sodium (CMC-Na), a PTC thermistor material, and the like.

In some embodiments, the negative electrode current collector may be a metal foil or a composite current collector. As an example of the metal foil, a copper foil may be used. The composite current collector may include a high molecular material substrate layer and a metal material layer formed on at least one surface of the high molecular material substrate layer. As an example, the metal material may include at least one of copper, a copper alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The negative electrode film layer is usually formed by coating the negative electrode current collector with a negative electrode slurry, followed by drying and cold pressing. The negative electrode slurry is generally formed by dispersing the negative electrode active material, the optional conductive agent, the optional binder, and the other optional auxiliaries in a solvent and uniformly stirring the mixture. The solvent may be N-methyl pyrrolidone (NMP) or deionized water, but not limited thereto.

The negative electrode plate does not exclude other additional functional layers other than the negative electrode film layer. For example, in some embodiments, the negative electrode plate further comprises a conductive base coating layer (e.g., composed of a conductive agent and a binder) sandwiched between the negative electrode current collector and the negative electrode film layer and arranged on a surface of the negative electrode current collector. In some embodiments, the negative electrode plate of the present application further comprises a protective layer coating the surface of the negative electrode film layer.

[Separator]

The separator is arranged between the positive electrode plate and the negative electrode plate and serves the function of isolation. The embodiments of the present application have no particular limitation on the type of the separator, and any well-known porous structure separator with good chemical stability and mechanical stability may be used.

In some embodiments, the material of the separator may be selected from one or more of glass fiber, nonwoven cloth, polyethylene, polypropylene, and polyvinylidene fluoride. The separator may be a single-layer film or a multi-layer composite film. When the separator is a multi-layer composite film, the materials of the layers are identical or different, which is not particularly limited.

[Electrolyte]

The electrolyte plays the role of conduct ions between the positive electrode plate and the negative electrode plate. There is no specific limitation on the type of electrolyte in the embodiments of the present application, and the electrolyte may be selected according to the requirement. For example, the electrolyte may be in a liquid or gel state.

In some embodiments, an electrolyte solution is used as the electrolyte. The electrolyte solution contains an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive and a positive electrode film-forming additive and may further include an additive that can improve certain performance of the battery, e.g., an additive that improves the overcharging performance of the battery, an additive that improves the high-temperature performance or low-temperature performance of the battery, and the like.

In some embodiments, the positive electrode plate, the separator, and the negative electrode plate may be made into an electrode assembly by a winding process or a stacking process.

In some embodiments, the battery cell may also comprise a shell for accommodating the electrode assembly and the electrolyte. The shell of the battery may be a hard shell, such as a hard plastic shell, an aluminum shell, a steel shell. The shell of the battery cell may also be a soft pouch, such as a bag-type soft pouch. The material of the soft pouch may be plastic, and as the plastic, polypropylene, polybutylene terephthalate, polybutylene succinate and the like may be listed.

The shape of the battery cell is not specially limited in the embodiments of the present application and may be cylindrical, prismatic, or in any other shape. For example, FIG. 3 shows a battery cell 5 with a square structure as an example.

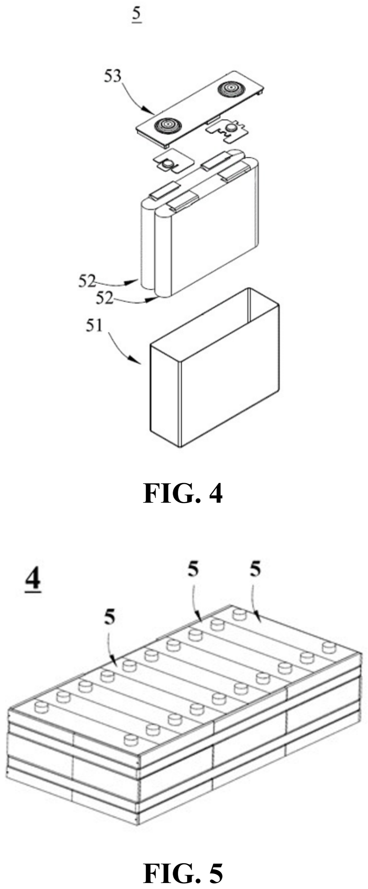

In some embodiments, referring to FIG. 4, the shell may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 included in the battery cell 5 may be one or more, which may be selected by those skilled in the art according to specific actual requirements.

Methods for preparing the battery cell according to the embodiments of the present application are well known. In some embodiments, the electrode assembly may be put in the shell and oven dried, then the electrolyte solution is injected, and the battery cell is obtained after processes such as vacuum encapsulation, standing, formation, and shaping.

In some embodiments, the battery mentioned in the embodiments of the present application refers to a single physical module including one or more battery cells to provide higher voltage and capacity. For example, the battery mentioned in the embodiments of the present application may be a battery module or a battery pack. The battery generally comprises a box for encapsulating one or more battery cells. The box can prevent liquid or other foreign matters from affecting charging or discharging of the battery cells.

In some embodiments, there may be a plurality of battery cells in the battery, and the plurality of battery cells may be connected in series or parallel or series-parallel connection. The series-parallel connection means that some of the plurality of battery cells are connected in series and some are connected in parallel. The plurality of battery cells may be directly connected in series, in parallel, or in parallel-series, and then the entirety formed by the plurality of battery cells is accommodated in the box. Of course, it may also be an entirety formed by connecting the plurality of battery cells in series, in parallel, or in parallel-series to form battery modules and then connecting the plurality of battery modules in series, in parallel, or in parallel-series, and is then accommodated in the box.

FIG. 5 is a schematic view of a battery module 4 as an example. As shown in FIG. 5, there are a plurality of battery cells 5, and the plurality of battery cells 5 are connected in series, or in parallel, or in parallel-series connection in advance to form a battery module 4. The plurality of battery cells 5 in the battery module 4 may be electrically connected to each other via a bus component, so as to realize parallel connection, series connection or series-parallel connection of the plurality of battery cells 5 in the battery module 4. In the battery module 4, the plurality of battery cells 5 may be sequentially arranged in the length direction of the battery module 4. Of course, any other arrangement is also possible. The plurality of battery cells 5 may be further fixed by fasteners.

In some embodiments, the aforementioned battery module may further be assembled into a battery pack, and the number of battery modules contained in the battery pack may be adjusted according to the application and capacity of the battery pack.

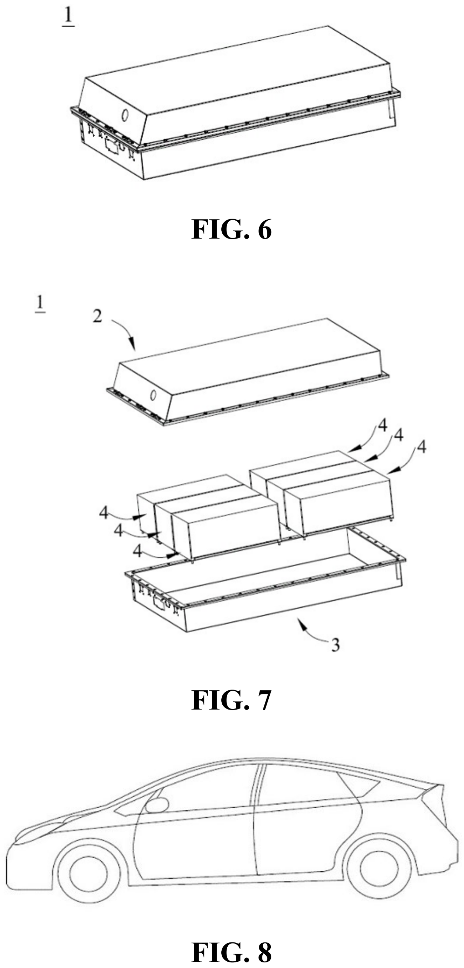

FIG. 6 and FIG. 7 are schematic views of a battery pack 1 as an example. As shown in FIG. 6 and FIG. 7, the battery pack 1 may comprise a box and a plurality of battery modules 4 arranged in the box. The plurality of battery modules 4 in the battery pack 1 may be electrically connected to each other via a bus component, so as to realize parallel connection, series connection or series-parallel connection of the plurality of battery modules 4 in the battery pack 1. The box comprises an upper box 2 and a lower box 3, where the upper box 2 is configured to cover the lower box 3 to form an enclosed space for accommodating the battery modules 4. The plurality of battery modules 4 may be arranged in the battery box in any manner.

Electrical apparatus

Embodiments of the present application further provide an electrical apparatus, the electrical apparatus comprises the battery cell provided in the embodiments of the present application, and the battery cell is used for providing electric energy. The battery cell may be used as a power source of the electrical apparatus, or may be used as an energy storage unit of the electrical apparatus. The electrical apparatus may include, but not limited to, a mobile device (e.g., a mobile phone or a laptop), an electric vehicle (e.g., an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the battery cell, the battery module containing a plurality of battery cells or the battery pack may be selected according to the use requirements.

FIG. 8 shows an electrical apparatus as an example. The electrical apparatus is an all-electric vehicle, a hybrid electric vehicle, or a plug-in hybrid electric vehicle, etc. In order to meet the requirements of the electrical apparatus for high power and high energy density, a battery pack or a battery module may be used.

As another example, the electrical apparatus may be a mobile phone, a tablet, a laptop, etc. The apparatus is generally required to be light and thin, and battery cell may be adopted as the power source.

Examples

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. The reagents or instruments used without manufacturer indicated are all commercially available conventional products.

Example 1

Preparation of composite positive electrode material

Particles containing elemental M (particles of elemental S) with a volume distribution particle size Dv50 of 1 $\mu$m, a lithium-ion conductor material (lithium zinc germanium oxide), and a binder (castor oil-based UV oligomer binder) were mixed in a mass ratio of 3.6:90:6.4 and ball-milled to give a slurry containing a composite material. The ionic conductivity $\delta$ of the lithium-ion conductor material is $1.2 \times 10^{-2}$ S/cm, and the molecular weight of the castor oil-based UV oligomer in the binder is 500 Da.

The above slurry and a positive electrode active material $LiNi_{0.9}Co_{0.05}Mn_{0.05}$ (NCM955) were well mixed, and then a castor oil-based UV oligomer binder was cured under UV light to coat the composite material onto at least part of the surface of the positive electrode active material to give a composite positive electrode material. Based on the total mass of the composite positive electrode material, the percentage mass content $w_1$ of the particles containing elemental M is 0.02%, and the percentage mass content $w_2$ of the lithium-ion conductor material is 0.5%.

Preparation of positive electrode plate

A positive electrode active material, a conductive agent carbon black, and a binder polyvinylidene fluoride (PVDF) in a mass ratio of 96.5:1.5:2 were well mixed in a suitable amount of solvent N-methylpyrrolidone (NMP) to give a positive electrode slurry, the positive electrode slurry was coated onto a positive electrode current collector aluminum foil, and subjected to oven drying, cold pressing, slitting, cutting and other processes to give a positive electrode plate.

Preparation of negative electrode plate

Artificial graphite as a negative electrode active material, silicon monoxide, carbon black as a conductive agent, styrene butadiene rubber (SBR) as a binder, and carboxymethyl cellulose sodium (CMC) in a mass ratio of 90:5:2:2:1 were well mixed in an appropriate amount of deionized water as a solvent to give a negative electrode slurry, the negative electrode slurry was applied to a copper foil as a negative electrode current collector, and subjected to oven drying, cold pressing, slitting, and cutting processes to give a negative electrode plate.

Preparation of separator

A polyethylene film was used as the separator.

Preparation of electrolyte solution

A lithium salt (prepared by mixing LiPF6 and LiFSI in a mass ratio of 2:8) was dissolved in a solvent composed of ethylene carbonate (EC), ethyl methyl carbonate (EMC), and diethyl carbonate (DEC) in a volume ratio of 1:1:1, resulting in an electrolyte solution with a lithium salt concentration of 1 mol/L.

Preparation of secondary battery

The positive electrode plate, the separator, and the negative electrode plate were stacked in sequence and wound to give an electrode assembly; and the electrode assembly was placed in an outer package and dried, the electrolyte solution was then injected, and after processes such as vacuum encapsulation, standing, formation, and shaping, the secondary battery was obtained.

Examples 2-19

Based on the preparation process of the composite positive electrode material in Example 1, the type of positive electrode active material, the type of particles containing elemental M, the volume distribution particle size Dv50 of the particles containing elemental M, the type of lithium-ion conductor material, the type of binder, w1, and w2 were adjusted as shown in Table 1 to prepare the composite positive electrode materials of Examples 2-19. The adjustment of w1 and w2 may be achieved by adjusting the amount of at least one of the positive electrode active material, the particles containing elemental M, and the lithium-ion conductor material. The positive electrode active material of Example 18 is Li-$Ni_{0.9}Co_{0.05}Al_{0.05}$ (NCA955).

The preparation of the positive electrode plate, negative electrode plate, separator, electrolyte solution and secondary battery in Examples 2-19 is the same as that in Example 1.

Comparative Examples 1-2

Based on the preparation process of the composite positive electrode material in Example 1, the preparation parameters of the composite positive electrode material were adjusted as shown in Table 1 to prepare the composite positive electrode materials of Comparative Examples 1-2.

The preparation of the positive electrode plate, negative electrode plate, separator, electrolyte solution and secondary battery in Comparative Examples 1-2 is the same as that in Example 1.

Tests

(1) Initial DCR test

At 25°C, the second battery was charged at a constant current rate of 0.33C to 4.25V, then charged at a constant voltage of 4.25V to a cutoff current of 0.05C, left for 5 min, and then discharged at a constant current rate of 0.33C to a stop voltage of 2.8V, thus obtaining the initial discharge capacity C0.

At 25°C, the secondary battery was allowed to stand for 30 min, then charged to 4.25V at a constant current rate of 0.33C0, then charged to a cutoff current of 0.05C0 at a constant voltage of 4.25V, allowed to stand for 10 min, and then discharged to 50% SOC at a constant current rate of 0.33C0, allowed to stand for 60 min, and the voltage at this time was recorded as U0. Then, discharge was conducted at a rate of 4C0 for 10s, and the voltage U at 10s of discharge was recorded. The current corresponding to the battery's initial $DCR=(U-U_0)/4C_0$ rate was calculated.

(2) Storage performance test

At 25°C, the second battery was charged at a constant current rate of 0.33C to 4.25V, then charged at a constant voltage of 4.25V to a cutoff current of 0.05C, left for 5 min, and then discharged at a constant current rate of 0.33C to a stop voltage of 2.8V, thus obtaining the initial discharge capacity C0.

The secondary battery was charged at a constant current rate of 0.33C to 4.25V, then charged at a constant voltage of 4.25V to a stop current of 0.05C, and then stored in an environment at 60°C for 60 days. Thereafter, the secondary battery was taken out and cooled to 25°C. At 25°C, the battery was discharged at a constant current rate of 0.33C to 2.8V, then charged at a constant current rate of 0.33C to a stop voltage of 4.25V, then charged at a constant voltage of 4.25V to a cutoff current of 0.05C, left for 5 min, and then discharged at a constant current rate of 0.33C to a stop voltage of 2.8V, thus obtaining the discharge capacity C60 after high-temperature storage. Storage capacity retention rate of secondary battery=C60/C0×100%.

Then, at 25°C, the secondary battery was allowed to stand for 30 min, then charged to 4.25V at a constant current rate of 0.33C, then charged to a cutoff current of 0.05C at a constant voltage of 4.25V, allowed to stand for 10 min, and then discharged to 50% SOC at a constant current rate of 0.33C, allowed to stand for 60 min, and the voltage at this time was recorded as Ua. Then, discharge was conducted at a rate of 4C for 10s, and the voltage Ub at 10s of discharge was recorded.

The current corresponding to the battery's storage DCR=(Ua-Ub)/4C rate was calculated. Storage DCR growth rate of secondary battery = (storage DCR - initial DCR) / initial DCR × 100%.

(3) Cycling performance test

The secondary battery was kept at 45°C for 2 h, allowed to stand for 5 min, and then charged to 4.25V at a constant current rate of 1/3C. Subsequently, it was charged to a cutoff current of 0.05C at a constant voltage of 4.25V, allowed to stand for 5 min, and discharged to 2.8V at a constant current rate of 0.5C, and allowed to stand for 5 min. This constituted one charge-discharge cycle. The above steps were repeated for the same secondary battery, and the discharge capacity $D_0$ of the first cycle and the discharge capacity $D_{2000}$ of the 2000th cycle were recorded. Secondary battery's cycling capacity retention rate $P_{2000}=D_{2000}/D_0×100\%$.

(4) Rate performance test

At 25°C, the second battery was charged at a constant current rate of 0.33C to 4.25V, then charged at a constant voltage of 4.25V to a cutoff current of 0.05C, left for 5 min, and then discharged at a constant current rate of 0.33C to a stop voltage of 2.8V, thus obtaining the initial discharge capacity $C_0$. After standing for 5 min, the battery was charged at a constant current rate of 0.33C to 4.25V, and then charged at a constant voltage of 4.25V to a cut-off current of 0.05C. After standing for 5 min, the battery was discharged at a rate of 1C to 2.8V, and the discharge capacity at the rate of 1C was $C_1$; the battery was then charged at a constant current rate of 0.33C to 4.25V and then charged at a constant voltage to 0.05C.

After standing for 5 min, the battery was discharged at a rate of 2C to 2.8V, and the discharge capacity at the rate of 2C was $C_2$.

$$\text{Capacity retention rate at 1C} = C1/C0 \times 100\%$$

$$\text{Capacity retention rate at 2C} = C2/C0 \times 100\%$$

The larger the values of capacity retention rate at 1C and capacity retention rate at 2C, the better the rate performance of the battery.

The test results are detailed in Table 2.

Table 1

| No. | Positive electrode active material | M | Dv50 | $w_1$/% | lithium-ion conductor materials | $\delta$/(S/cm) | $w_2$/% | Binder | Molecular weight |
|---|---|---|---|---|---|---|---|---|---|
| Example 1 | NCM955 | S | $1\mu m$ | 0.02 | lithium zinc germanium oxide | $1.2\times10^{-2}$ | 0.5 | Castor oil-based UV oligomer | 500Da |
| Example 2 | NCM955 | S | $1\mu m$ | 1.0 | lithium zinc germanium oxide | $1.2\times10^{-2}$ | 0.5 | | 500Da |
| Example 3 | NCM955 | S | $1\mu m$ | 3.0 | lithium zinc germanium oxide | $1.2\times10^{-2}$ | 0.5 | | 500Da |
| Example 4 | NCM955 | S | $1\mu m$ | 5.0 | lithium zinc germanium oxide | $1.2\times10^{-2}$ | 0.5 | | 500Da |
| Example 5 | NCM955 | S | $0.3\mu m$ | 1.0 | lithium zinc germanium oxide | $1.2\times10^{-2}$ | 0.5 | | 500Da |
| Example 6 | NCM955 | S | $2\mu m$ | 1.0 | lithium zinc germanium oxide | $1.2\times10^{-2}$ | 0.5 | | 500Da |
| Example 7 | NCM955 | S | $1\mu m$ | 1.0 | lithium zinc germanium oxide | $1.2\times10^{-2}$ | 0.01 | | 500Da |
| Example 8 | NCM955 | S | $1\mu m$ | 1.0 | lithium zinc germanium oxide | $1.2\times10^{-2}$ | 1 | | 500Da |
| Example 9 | NCM955 | S | $1\mu m$ | 1.0 | lithium zinc germanium oxide | $1.2\times10^{-2}$ | 0.5 | | 200Da |
| Example 10 | NCM955 | S | $1\mu m$ | 1.0 | lithium zinc germanium oxide | $1.2\times10^{-2}$ | 0.5 | | 800Da |
| Example 11 | NCM955 | Se | $1\mu m$ | 1.0 | lithium zinc germanium oxide | $1.2\times10^{-2}$ | 0.5 | | 500Da |

(continued)

| No. | Positive electrode active material | M | Dv50 | $w_1$/% | lithium-ion conductor materials | $\delta$/(S/cm) | $w_2$/% | Binder | Molecular weight |
|---|---|---|---|---|---|---|---|---|---|
| Example 12 | NCM955 | Te | $1\mu m$ | 1.0 | lithium zinc germanium oxide | $1.2\times10^{-2}$ | 0.5 | | 500Da |
| Example 13 | NCM955 | S | $1\mu m$ | 1.0 | Lithium aluminum germanium phosphate | $4\times10^{-4}$ | 0.5 | | 500Da |
| Example 14 | NCM955 | S | $1\mu m$ | 1.0 | Lithium lanthanum titanate | $1\times10^{-3}$ | 0.5 | | 500Da |
| Example 15 | NCM955 | S | $1\mu m$ | 1.0 | Lithium aluminum titanium phosphate | $6\times10^{-4}$ | 0.5 | | 500Da |
| Example 16 | NCM955 | S | $1\mu m$ | 1.0 | Glassy lithium conductive electrolyte powder | $1\times10^{-3}$ | 0.5 | | 500Da |
| Example 17 | NCM955 | S | $1\mu m$ | 1.0 | Garnet-structured lithium conductive electrolyte powder | $2.87\times10^{-4}$ | 0.5 | | 500Da |
| Example 18 | NCA955 | S | $1\mu m$ | 1.0 | lithium zinc germanium oxide | $1.2\times10^{-2}$ | 0.5 | | 500Da |
| Example 19 | NCM955 | S | $1\mu m$ | 1.0 | lithium zinc germanium oxide | $1.2\times10^{-2}$ | 0.5 | PVDF | 8000Da |
| Comparative Example 1 | NCM955 | S | $1\mu m$ | 1.0 | / | / | / | Castor oil-based UV oligomer | 500Da |
| Comparative Example 2 | NCA955 | S | $1\mu m$ | 1.0 | / | / | / | | 500Da |

Table 2

| No. | Before storage | | 60-day storage | | | | Rate performance | | $P_{2000}$ |
|---|---|---|---|---|---|---|---|---|---|
| | $C_0$ /mAh | DCR /$\Omega$ | $C_{60}$ /mAh | DCR /$\Omega$ | Storage capacity retention rate | Storage DCR increase rate | Capacity retention rate at 1C | Capacity retention rate at 2C | |
| Example 1 | 2100 | 2.5 | 1957 | 3.4 | 93.2% | 36.0% | 98.7% | 98.4% | 95.0% |
| Example 2 | 2150 | 2.2 | 2064 | 2.7 | 96.0% | 22.7% | 99.3% | 98.8% | 96.5% |
| Example 3 | 2120 | 2.4 | 2003 | 3.1 | 94.5% | 29.2% | 99.1% | 98.6% | 95.4% |

(continued)

| No. | Before storage | | 60-day storage | | | | Rate performance | | $P_{2000}$ |
|---|---|---|---|---|---|---|---|---|---|
| | $C_0$ /mAh | DCR /Ω | $C_{60}$ /mAh | DCR /Ω | Storage capacity retention rate | Storage DCR increase rate | Capacity retention rate at 1C | Capacity retention rate at 2C | |
| Example 4 | 2050 | 2.6 | 1925 | 3.6 | 93.9% | 38.5% | 99.0% | 98.5% | 95.0% |
| Example 5 | 2090 | 2.6 | 1958 | 3.5 | 93.7% | 34.6% | 99.2% | 98.7% | 95.3% |
| Example 6 | 2080 | 2.6 | 1951 | 3.4 | 93.8% | 30.8% | 99.2% | 98.7% | 95.2% |
| Example 7 | 2110 | 2.9 | 1975 | 4.1 | 93.6% | 41.4% | 98.5% | 98.1% | 95.3% |
| Example 8 | 2100 | 2.1 | 1976 | 2.5 | 94.1% | 19.0% | 99.5% | 99.0% | 95.5% |
| Example 9 | 2090 | 2.7 | 1971 | 3.6 | 94.3% | 33.3% | 99.2% | 98.7% | 95.3% |
| Example 10 | 2080 | 2.9 | 1959 | 3.8 | 94.2% | 31.0% | 99.2% | 98.7% | 95.1% |
| Example 11 | 2148 | 2.1 | 2049 | 2.6 | 95.4% | 23.8% | 99.2% | 98.7% | 96.5% |
| Example 12 | 2145 | 2.1 | 2046 | 2.6 | 95.4% | 23.8% | 99.2% | 98.7% | 96.5% |
| Example 13 | 2130 | 2.4 | 2024 | 3.0 | 95.0% | 25.0% | 98.9% | 98.5% | 95.9% |
| Example 14 | 2135 | 2.3 | 2028 | 2.9 | 95.0% | 23.9% | 99.1% | 98.6% | 96.0% |
| Example 15 | 2130 | 2.4 | 2024 | 3.0 | 95.0% | 25.0% | 99.0% | 98.5% | 96.0% |
| Example 16 | 2135 | 2.3 | 2028 | 2.9 | 95.0% | 23.9% | 99.1% | 98.6% | 95.9% |
| Example 17 | 2130 | 2.4 | 2024 | 3.0 | 95.0% | 25.0% | 99.0% | 98.5% | 96.0% |
| Example 18 | 2140 | 2.3 | 2044 | 2.9 | 95.5% | 23.9% | 99.3% | 98.8% | 96.1% |
| Example 19 | 2130 | 2.6 | 2024 | 3.4 | 95.0% | 30.8% | 99.2% | 98.7% | 95.8% |
| Comparative Example 1 | 2050 | 3.4 | 1882 | 4.8 | 91.8% | 41.2% | 98.1% | 97.5% | 93.1% |
| Comparative Example 2 | 2040 | 3.6 | 1869 | 5.1 | 91.6% | 41.7% | 98.2% | 97.6% | 93.0% |

From the test results in Table 1 and Table 2, it may be seen that the composite positive electrode material of the embodiments of the present application has a specific structure and composition, can effectively reduce the DCR of the battery and improve the cycling performance, rate performance and storage performance of the battery.

In contrast, Comparative Examples 1-2 use elemental sulfur to coat the positive electrode active material, and its battery has a higher DCR, and its cycling performance, rate performance, and storage performance are far inferior to those of Examples 1-19.

The given compounds which are not listed in the examples are all applicable to the technical solution of the present invention due to the fact that they are similar to the compounds listed in the examples in chemical properties and the reaction properties presented when participating in electrochemical reactions, so they are not exhaustively enumerated here.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the main intention of the present application, various modifications that may be conceived by those skilled in the art for the embodiments, and other forms constructed by combining some of the constituent elements of the embodiments are also included within the scope of the present application.

**Claims**

1. A composite positive electrode material, comprising:

a positive electrode active material; and

a coating layer, coating at least part of the surface of the positive electrode active material, wherein the coating layer comprises a composite material,

the composite material comprises particles containing elemental M and a lithium-ion conductor material attached onto the surface of the particles containing elemental M, and M comprises at least one of S, Se and Te.

2. The composite positive electrode material according to claim 1, wherein

the lithium-ion conductor material includes a lithium-ion conductor material having an ionic conductivity of $1 \times 10^{-5}$ S/cm or more, and optionally 0.001 S/cm - 1 S/cm.

3. The composite positive electrode material according to claim 1 or 2, wherein

the lithium-ion conductor material includes at least one of lithium zinc germanium oxide, lithium aluminum titanium phosphate, lithium aluminum germanium phosphate, lithium lanthanum titanate, glassy lithium conductive electrolyte powder, and garnet-structured lithium conductive electrolyte powder;

optionally, the lithium-ion conductor material includes at least one of lithium aluminum titanium phosphate and lithium aluminum germanium phosphate.

4. The composite positive electrode material according to any one of claims 1 to 3, wherein

the volume distribution particle size Dv50 of the particles containing elemental M is ≤2 μm, and optionally 0.3 μm - 1 μm; and/or

the volume distribution particle size Dv50 of the lithium-ion conductor material is ≤100 nm, and optionally 20 nm - 50 nm; and/or

the volume distribution particle size Dv50 of the positive electrode active material is 5 μm - 15 μm; and/or

the volume distribution particle size Dv50 of the composite positive electrode material is 8 μm - 20 μm.

5. The composite positive electrode material according to any one of claims 1 to 4, wherein based on the total mass of the composite positive electrode material,

the percentage mass content of the positive electrode active material is 80%-98%, and optionally 90%-95%; and/or

the percentage mass content of the particles containing elemental M is 0.02%-5%, and optionally 0.05%-2%; and/or

the percentage mass content of the lithium-ion conductor material is 0.01%-1%, and optionally 0.05%-1%.

6. The composite positive electrode material according to any one of claims 1 to 5, wherein

the composite material is attached onto the surface of the positive electrode active material through a binder, thereby forming the coating layer;

optionally, the lithium-ion conductor material is attached onto the surface of the particles containing elemental M through the binder.

7. The composite positive electrode material according to claim 5, wherein

the binder includes a castor oil-based UV oligomer binder;

optionally, the castor oil-based UV oligomer binder includes a castor oil-based UV oligomer having a molecular weight of 200 Da - 800 Da.

8. The composite positive electrode material according to any one of claims 1 to 7, wherein the positive electrode active material includes a ternary nickel-cobalt-manganese material and/or a ternary nickel-cobalt-aluminum material;

optionally, in the ternary nickel-cobalt-manganese material, the molar content of element Ni among all the transition metal elements is greater than or equal to 0.6;

optionally, in the ternary nickel-cobalt-aluminum material, the molar content of element Ni among all the transition metal elements is greater than or equal to 0.6.

9. A method for preparing a composite positive electrode material, comprising:

preparing a composite material, comprising mixing particles containing elemental M with a lithium-ion conductor material, and having the lithium-ion conductor material attached onto the surface of the particles containing elemental M to give a composite material, wherein M comprises at least one of S, Se and Te;

preparing a composite positive electrode material, comprising well mixing the composite material and a positive electrode active material, and coating the composite material onto at least part of the surface of the positive electrode active material to give a composite positive electrode material.

10. The method according to claim 9, wherein

the preparing the composite material comprises: mixing the particles containing elemental M, the lithium-ion conductor material, and a castor oil-based UV oligomer binder and ball milling the mixture to give a slurry containing the composite material;

the preparing the composite positive electrode material comprises: well mixing the slurry and the positive electrode active material, and then curing the castor oil-based UV oligomer binder to coat the composite material onto at least part of the surface of the positive electrode active material to give a composite positive electrode material.

11. The method according to claim 10, wherein

the mass ratio of the particles containing elemental M to the lithium-ion conductor material is 1:0.3-1:0.6; and/or the mass ratio of the particles containing elemental M to the castor oil-based UV oligomer binder is 1:0.1-1:0.3.

12. A positive electrode plate, comprising a positive electrode current collector and a positive electrode film layer located on at least one side of the positive electrode current collector, wherein the positive electrode film layer comprises the composite positive electrode material according to any one of claims 1 to 8, or the composite positive electrode material prepared by the method according to any one of claims 9 to 11.

13. A battery, comprising the positive electrode plate according to claim 12.

14. An electrical apparatus, comprising the battery according to claim 13.

**FIG. 1**

**FIG. 2**

**FIG. 3**

5

53

52

52

51

**FIG. 4**

4

5

5

5

**FIG. 5**

**FIG. 6**

**FIG. 7**

**FIG. 8**

## INTERNATIONAL SEARCH REPORT

| International application No. |
|---|
| **PCT/CN2024/070890** |

| A. | CLASSIFICATION OF SUBJECT MATTER |
|---|---|

H01M 4/13(2010.01)i; H01M 4/36(2006.01)i; H01M4/62(2006.01)i; H01M10/052(2010.01)i

According to International Patent Classification (IPC) or to both national classification and IPC

| B. | FIELDS SEARCHED |
|---|---|

Minimum documentation searched (classification system followed by classification symbols)

   IPC: H01M4, H01M10

Documentation searched other than minimum documentation to the extent that such documents are included in the fields searched

Electronic data base consulted during the international search (name of data base and, where practicable, search terms used)

   CNTXT, ENTXTC, ENTXT, VEN, CJFD, ISI_Web of Science: 正极, 活性, 包覆, 单质, 硫, 硒, 碲, 锂离子, 导体, 导电, 二次电池, 粘结剂, 蓖麻油, positive, anode, active, cover+, coat+, elemental, sulfur, selenium, tellurium, lithium, conduct+, secondary battery, adhesive, castor oil

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 115832299 A (NINGDE CONTEMPORARY AMPEREX TECHNOLOGY CO., LTD.) 21 March 2023 (2023-03-21) <br> description, paragraphs 44-51, 60-65, 74, and 95 | 1-14 |
| Y | CN 108346785 A (WANG SHUNLIANG) 31 July 2018 (2018-07-31) <br> description, paragraphs 2-4 | 1-14 |
| Y | CN 112646120 A (SOUTH CHINA AGRICULTURAL UNIVERSITY et al.) 13 April 2021 (2021-04-13) <br> description, paragraph 8 | 7-8, 12-14 |
| A | CN 114824192 A (GUOLIAN AUTOMOBILE BATTERY RESEARCH INSTITUTE CO., LTD. et al.) 29 July 2022 (2022-07-29) <br> entire description | 1-14 |
| A | US 2022123302 A1 (CONTEMPORARY AMPEREX TECHNOLOGY CO., LTD.) 21 April 2022 (2022-04-21) <br> entire description | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 March 2024** | **25 March 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/070890**

| Patent document cited in search report | | | Publication date (day/month/year) | Patent family member(s) | | | Publication date (day/month/year) |
|---|---|---|---|---|---|---|---|
| CN | 115832299 | A | 21 March 2023 | None | | | |
| CN | 108346785 | A | 31 July 2018 | None | | | |
| CN | 112646120 | A | 13 April 2021 | None | | | |
| CN | 114824192 | A | 29 July 2022 | None | | | |
| US | 2022123302 | A1 | 21 April 2022 | WO | 2021042983 | A1 | 11 March 2021 |
| | | | | US | 11417883 | B2 | 16 August 2022 |
| | | | | EP | 3920283 | A1 | 08 December 2021 |
| | | | | EP | 3920283 | A4 | 08 June 2022 |

Form PCT/ISA/210 (patent family annex) (July 2022)

**EP 4 723 188 A1**

**Patent documents cited in the description**

- CN 202310703936X